# EUROPÄISCHE PATENTSCHRIFT

(11) **EP 1 848 187 B1**
(45) Veröffentlichungstag und Bekanntmachung des Hinweises auf die Patenterteilung: **13.06.2018**
(21) Anmeldenummer: 07006916.6
(22) Anmeldetag: 03.04.2007
(51) Int. Cl.: H04M 3/00, H04M 3/38, H04M 3/42, G10L 17/00

(54) **Verfahren und Vorrichtung zur Verifizierung der Identität eines Nutzers verschiedener Telekommunikationsdienste mittels biometrischer Merkmale**
Method and device for verifying the identity of a user of various telecommunication services using biometric characteristics
Procédé et dispositif destinés à la vérification de l'identité d'un utilisateur de divers services de télécommunication au moyen d'un marqueur biométrique

(30) Priorität: 21.04.2006 DE 102006019362
(43) Veröffentlichungstag der Anmeldung: 24.10.2007
(73) Patentinhaber: Deutsche Telekom AG, 53113 Bonn (DE)
(72) Erfinder: Runge, Fred, 15838 Wünsdorf (DE); Emhardt, Jürgen, 10777 Berlin (DE)
(74) Vertreter: Kampfenkel, Klaus

(56) Entgegenhaltungen:
- EP-A- 1 172 771
- EP-A- 1 202 228
- US-A1- 2004 107 099

## Beschreibung

Die Erfindung betrifft die gesteuerte Verifizierung einer angenommenen Identität eines Nutzers bzw. rufenden oder gerufenen Teilnehmers, der über ein Kommunikationsendgerät mit einem Telekommunikationsnetz verbunden ist, anhand wenigstens eines biometrischen Merkmals zur Verbindung des rufenden Teilnehmers mit einem Kommunikationssystem, das wenigstens einen authentisierungspflichtigen Kommunikationsdienst aus einer Anzahl von authentisierungspflichtigen Kommunikationsdiensten mit unterschiedlichen Sicherheitsanforderungen unterstützt.

Bekannt ist es, die Identifizierung eines Telekommunikationsanschlusses oder eines Kommunikationsendgerätes, welches mit einem Telekommunikationsnetz verbunden ist, über entsprechende, in verschiedenen Telekommunikationsnetzen übermittelte Identitätskennungen vorzunehmen. Derartige Kennungen umfassen z.B. CLI (Calling Line Identification), ANI (Automatic Number Identification), HLR (Home Location Register), IP-Adresse, ID-Nummer und andere. Die personenbezogene Unterscheidung einzelner Nutzer, beispielsweise mehrerer Nutzer eines Telekommunikationsanschlusses, ist z.B. durch Abfrage einer personengebundenen Identitätskennung, wie beispielsweise einer PIN, möglich. Ebenfalls zum Stand der Technik gehören Sprachverarbeitungssysteme und Sprecherverarbeitungssysteme. Wird bei Spracherkennungssystemen der Inhalt der gesprochenen Äußerung erkannt, sind Sprechererkennungssysteme, einschließlich Systeme zur Sprecherverifikation, Sprecheridentifikation und Sprecherklassifizierung, auf die Erkennung von charakteristischen Sprachmerkmalen ausgerichtet. Da die Technik der Sprechererkennung in vieler Hinsicht der Spracherkennung ähnelt, werden bei viele Anwendungsarten beide Funktionen häufig in einem Gerät miteinander verbunden. Algorithmen, die eine größere Anzahl von sprachlichen Äußerungen in Echtzeit erkennen können, benutzten wahrscheinlichkeitstheoretische Ansätze, wobei sich die Arbeitsweise grundsätzlich in eine Vorverarbeitung eines erfassten Sprachsignals zur Ableitung eines Musters aus dem Sprachsignal, ein Trainieren zum Erzeugen eines Referenzmusters und eine Erkennung basierend auf meist wahrscheinlichkeitstheoretischen Berechnungen gliedert.

Hierauf basierend sind grundsätzlich Systeme und Verfahren bekannt, die einem Nutzer bzw. rufenden Teilnehmer, der über ein Kommunikationsendgerät mit einem Telekommunikationsnetz verbunden ist, den Zugriff auf einen gewünschten Telekommunikationsdienst, zum Beispiel auf einen Sprachdienst, nach erfolgreicher Sprecherverifizierung ermöglichen. Im Allgemeinen werden hierzu nach Ermittlung einer Identitätskennung, sprachliche Äußerungen eines rufenden Teilnehmers als aktuelle Stimm- oder Sprachprobe erfasst und ein unter der Identitätskennung gespeichertes Muster oder Abdruck als Referenzmuster oder Referenzabdruck ausgelesen und mit der aktuellen Stimm- oder Sprachprobe verglichen, um eine Prüfung auf eine innerhalb bestimmter Grenzen festgelegte Ähnlichkeit durchzuführen. Als Ähnlichkeitsmaß kann zum Beispiel ein Vergleichswert geliefert werden, welcher z.B. um so größer ist, je größer die Ähnlichkeit der aktuellen biometrischen Stimm- oder Sprachprobe mit den Merkmalen des Referenzmusters ist. Überschreitet das Ähnlichkeitsmaß einen festgelegten Wert, kann in diesem Fall die biometrische Stimm- oder Sprachprobe als "akzeptiert" gewertet werden. Je höher die Sicherheitsanforderungen sind, desto enger wird im Allgemeinen der sogenannte Grenz- oder Schwellenwert für das Ähnlichkeitsmaß festgelegt. Ein solches Verfahren ist z.B. aus der EP 1 249 016 B1 bekannt.

Für die nachfolgende Beschreibung und die anhängenden Ansprüche bezeichnet der Begriff "Verifizierung" einen Vorgang, welcher grundsätzlich dazu dient, einen vermuteten oder behaupteten Sachverhalt als wahr zu belegen. Der Begriff "Authentisierung" bezeichnet die Verifizierung einer angenommenen Identität, zum Beispiel durch Übermittlung einer Identitätskennung, mit Prüfung auf Übereinstimmung zwischen der durch die Übermittlung der Identitätskennung angenommenen oder behaupteten Identität und der tatsächlichen Identität. Der Begriff "biometrische Probe" bezeichnet allgemein eine meist digitalisierte Aufnahme wenigstens eines biometrischen Merkmals einer Person, so dass z.B. der Begriff "Stimm- oder Sprachprobe" eine digitalisierte und/oder weiter verarbeitete Aufnahme einer sprachlichen Äußerung bezeichnet. Aus einem solchen Datensatz wird anschließend in einem komplexen Verfahren eine Struktur des wenigstens einen biometrischen Merkmals, eine sogenannte "Merkmalsstruktur" detektiert, z.B. ein Stimmprofil aus mindestens einer digitalisierten Aufnahme einer sprachlichen Äußerung von meist begrenzter Dauer. Ein "biometrischer Abdruck" ist ein in einem komplexen Verfahren aus mindestens einer biometrischen Probe genau einer Person berechnetes Musters von sich wiederholenden Strukturen von biometrischen Merkmalen. Der biometrische Abdruck wird gespeichert und kann als Referenzabdruck zur Berechnung der Ähnlichkeit, insbesondere gemäß festgelegter Merkmale, mit mindestens einer neuen biometrischen Probe herangezogen werden. Ein "Stimmabdruck" ist somit in einem komplexen Verfahren aus mindestens einer Stimmprobe einer bestimmten Person erstelltes Muster von sich meist wiederholenden Merkmalsstrukturen dieser Stimme, der gespeichert und als "Referenzstimmabdruck" zur Berechnung der Ähnlichkeit mit mindestens einer neuen Stimmprobe herangezogen werden kann.

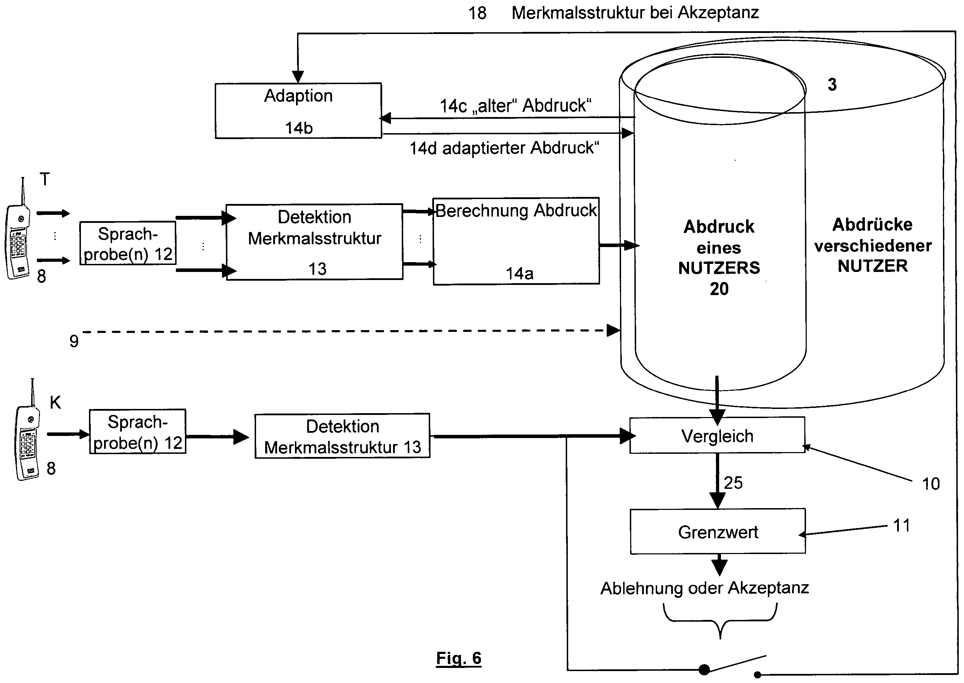

Um gemäß Stand der Technik einen biometrischen Abdruck, z.B. einen Stimmabdruck, zu erhalten wird, wie bei Fig. 6 skizziert, im Allgemeinen bei der Anmeldung zur Dienstnutzung der Nutzer 8 bzw. rufende Teilnehmer mit Kommunikationsendgerät in einem Dialog gebeten, zum Training "T" eine oder mehrere Sprachproben 12 zu hinterlassen, welche der Erstellung des biometrischen Abdrucks, also gemäß Fig. 6 des Stimmabdrucks dienen. Durch einen implementierten Algorithmus werden während des Initialisierungs- oder Trainingsdialogs "T" aus den Sprachproben (12) Merkmalsstrukturen detektiert 13 und hieraus ein dem Nutzer bzw. rufenden Teilnehmer 8 zugeordneter Stimmabdruck berechnet 14a. Der Nutzer 8 wird dabei durch eine automatisch ermittelte Identitätskennung 9, also insbesondere durch eine CLI, ANI, HLR, IP-Adresse, ID-Nummer, oder durch die erbetene Nennung einer Identitätskennung 9 identifiziert. Dieser Identitätskennung 9 wird der ermittelte Stimmabdruck zugeordnet, welcher, wie vorstehend definiert, keine Kopie der biometrischen Stimmproben, sondern einen durch einen spezifischen Algorithmus errechneten Datensatz aus den beim Training "T" erhaltenen Stimmproben darstellt. Der ermittelte Stimmabdruck 20 wird im Allgemeinen in einem gesonderten Datenbereich eines Speichers 3, auch Repository genannt, durch die Kennung 9 indiziert abgespeichert. Der so abgespeicherte Stimmabdruck 20 kann nun bei einem späteren Kontakt "K" des Nutzers 8 mit dem System dazu genutzt werden, dessen aufgrund der übermittelten Identitätskennung 9 angenommene Identität in einem Authentisierungsverfahren zu verifizieren. Dazu wird der Nutzer 8 erneut gebeten, mindestens eine Stimm- oder Sprachprobe 12, z.B. in Form einer gesprochenen Ziffernfolge, zu hinterlassen. Die Merkmalsstruktur dieser Probe 12 wird detektiert 13 und daraufhin mit den Merkmalen des im System zu der Identitätskennung vorhandenen Stimmabdrucks 20 verglichen 10. Während des Vergleichsprozesses wird ein Ähnlichkeitsmaß 25 ermittelt, welches die Ähnlichkeit der Merkmale der erhaltenen biometrischen Stimmprobe mit dem Referenzstimmabdruck widerspiegelt. Überschreitet z.B. das Ähnlichkeitsmaß 25 einen vorher festgelegten Grenz- oder Schwellenwert 11, so wird beispielsweise von der Identität des Nutzers, welcher die aktuelle Stimmprobe hinterlassen hat, mit dem Nutzer der das entsprechende Training für den als Referenzstimmabdruck zum Vergleich herangezogen Stimmabdruck durchgeführt hat, ausgegangen. Ferner kann, wie bei Fig. 6 zu sehen, die während des Authentisierungsprozesses abgegebene biometrische Probe nun falls erwünscht außer zur Verifizierung/Authentisierung bei erfolgreicher Authentisierung zur weiteren Adaption 14b des für diesen Nutzer bzw. rufenden Teilnehmer hinterlegten biometrischen Abdrucks genutzt werden, indem aus dem zum Vergleich herangezogenen vorhandenen biometrischen Stimmabdruck 20 als zu adaptierenden Abdruck 14c und aus der akzeptierten Merkmalsstruktur 18 der aktuell erhaltenen Sprachprobe 12 ein neuer, adaptierter Stimmabdruck verarbeitet 14d wird, der nun als Stimmabdruck 20 abgespeichert wird.

Ist der biometrische Referenzabdruck gemäß Fig. 6 nur zur Nutzung eines einzigen Dienstes oder zur Nutzung mehrerer Dienste mit gleichen Sicherheitsanforderungen und also nur zur Nutzung bei ein und demselben Grenzwert 11 für das Ähnlichkeitsmaß vorgesehen, bestehen für den Einsatz einer derartigen Verfahrensweise zur Adaption des biometrischen Abdruckes über einen längeren Zeitraum oftmals keine Bedenken.

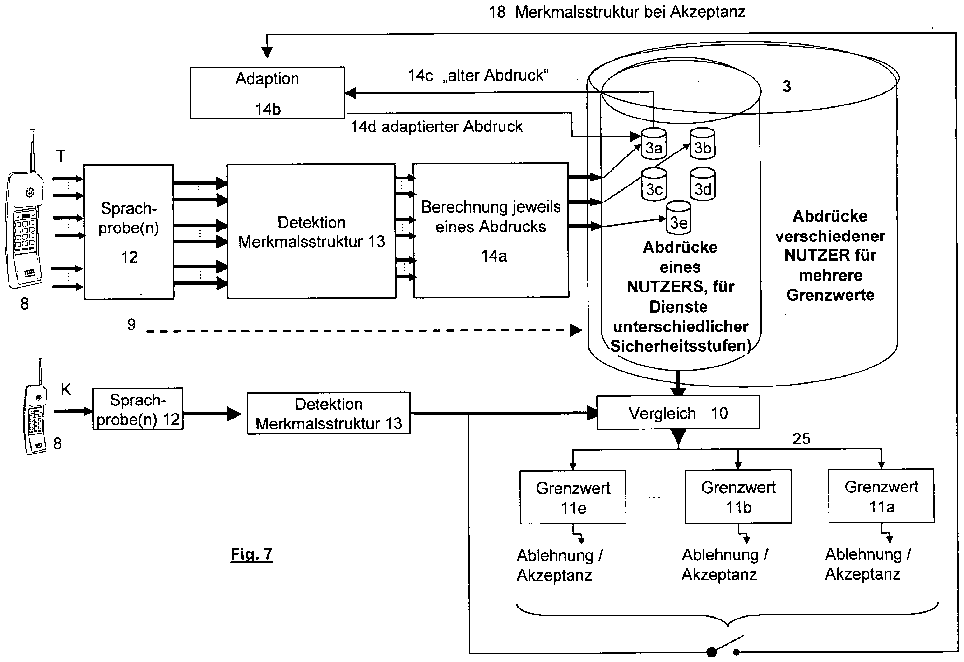

Sollte sich jedoch der Nutzer bzw. rufende Teilnehmer 8 mit Kommunikationsendgerät für verschiedene Dienste mit unterschiedlichen Sicherheitsanforderungen und somit anhand unterschiedlicher Grenzwerte 11a bis 11e für das Ähnlichkeitsmaß 25 authentisieren, wie bei Fig. 7 skizziert, muss er auch je nach Sicherheitsstufe in mehreren Trainingsdialogen oder -sitzungen "T" unterschiedliche dienstespezifische Stimmabdrücke 3a bis 3e trainieren. Zum Einen gelten dann auch für die Adaption eines jeweiligen Stimmabdruckes 3a bis 3e nach erfolgreicher Authentifizierung diese jeweils unterschiedlichen Grenzwerte 11a bis 11e für das Ähnlichkeitsmaß 25 entsprechend der jeweils geltenden Sicherheitsstufe, da andernfalls, also bei Nutzung nur eines einzigen Stimmabdrucks je Nutzer, die Einbeziehung von aus Sprachproben 12 detektierten Merkmalsmustern 13 mit schlechterem oder niedrigerem Ähnlichkeitsmaß 25, bei schlechterem bzw. niedrigerem geforderten Grenzwert für weniger sicherheitsrelevante Dienste, die Qualität des vorhandenen Stimmabdrucks im Lauf der Zeit hin zu Diensten mit der niedrigsten Sicherheitsanforderung adaptieren. Die Stimmabdrücke 3a bis 3e beziehen sich entsprechend bei Fig. 7 auf unterschiedliche Sicherheitsstufen. Zum Anderen ist bei verschiedenen Diensten mit unterschiedlichen Sicherheitsanforderungen im Allgemeinen für jeden Dienst oder Dienstgruppe mit gleicher Sicherheitsstufe ein separater Datenbereich erforderlich, was auch dazu führt, dass für jeden Dienst oder jede Dienstgruppe mit gleichen Sicherheitsanforderungen jeweils ein separater Trainingszyklus "T" zur Erstellung der Stimmabdrücke 3a bis 3e für den gleichen Nutzer durchgeführt werden muss, der sich dann für jeden Dienst, dass heißt mehrfach dieser Prozedur zu unterziehen hat.

Die US 2004/0107099 betrifft eine Vorrichtung zum automatischen Erkennen einer Sprache eines Sprechers, der autorisiert ist, auf eine Anwendung zuzugreifen. Dabei wird ein normalisierter Sprecherverifikationswert, der abhängig von einem Maximum-Likelihood-Verhältnis zwischen einem Sprachsegment und einem Akzeptanzmodel ist, mit einem ersten Grenzwert verglichen. Ein Normalisierungsparameter wird erneuert, falls der normalisierte Sprecherverifikationswert einen zweiten Grenzwert überschreitet.

Eine Aufgabe der Erfindung besteht darin, obengenannte Nachteile und den dabei auftretenden Zeit-, Speicher- und/oder Adaptionsaufwand wesentlich zu reduzieren. Insbesondere ist es eine Aufgabe der Erfindung, einen Weg zur Authentifizierung von Nutzern verschiedener Telekommunikationsdienste, insbesondere Sprachdienste, bereit zu stellen, welcher ermöglicht, dass ein Nutzer seinen biometrischen Abdruck, insbesondere Stimmabdruck, nur einmal trainieren muss und danach verschiedene authentisierungspflichtige Dienste oder neu hinzukommende Dienste mit unterschiedlichen Sicherheitsstufen über einen langen Zeitraum nutzen kann, ohne den später zu adaptierenden biometrischen Abdruck für jeden neuen Dienst unter Anpassung an dessen Sicherheitsanforderungen erneut trainieren zu müssen.

Die Aufgabe ist erfindungsgemäß durch die Gegenstände der unabhängigen Ansprüche gelöst. Vorteilhafte und/oder bevorzugte Ausführungsformen und Weiterbildungen sind Gegenstand der abhängigen Ansprüche.

Die Erfindung sieht folglich ein Verfahren vor, welches eine gesteuerte Verifizierung einer angenommenen Identität eines rufenden oder gerufenen Teilnehmers, der über ein Kommunikationsendgerät mit einem Telekommunikationsnetz verbunden ist, anhand wenigstens eines biometrischen Merkmals durchführt, und zwar zur Verbindung des rufenden bzw. gerufenen Teilnehmers mit einem Kommunikationssystem, das wenigstens einen authentisierungspflichtigen Kommunikationsdienst aus einer Anzahl von authentisierungspflichtigen Kommunikationsdiensten mit unterschiedlichen Sicherheitsanforderungen unterstützt. Nach Herstellen einer Kommunikationsverbindung zwischen dem Teilnehmer und einer mit dem Telekommunikationsnetz verbundenen Verifikationseinrichtung werden eine ermittelte Identitätskennung und der Teilnehmer einander zugeordnet und hierauf basierend eine Identität des Teilnehmers angenommen, eine Anfrage zur Nutzung wenigstens eines authentisierungspflichtigen Kommunikationsdienstes zur Verifikationseinrichtung übermittelt, wenigstens eine biometrische Probe des Teilnehmers erfasst und eine biometrische Merkmalsstruktur aus der biometrischen Probe ermittelt. Beim Durchführen einer Teilnehmerauthentisierung für den angefragten Kommunikationsdienst wird ein für die Identitätskennung initialisierend zugeordneter und gespeicherter biometrischer Abdruck zur Teilnehmerauthentisierung für die gesamte Anzahl von authentisierungspflichtigen Kommunikationsdiensten oder ein für die Identitätskennung nachfolgend zugeordneter und gespeicherter, adaptierter biometrischer Abdruck zur Teilnehmerauthentisierung zumindest für den angefragten Kommunikationsdienst als Referenzabdruck ausgelesen und mit wenigstens einem Merkmal der detektierten biometrischen Merkmalsstruktur verglichen. Bei Erreichen eines ersten Grenzwertes in Reaktion auf das Vergleichsergebnis wird die Identität des Teilnehmers für den angefragten Kommunikationsdienst verifiziert und der Teilnehmer mit dem diesen angefragten Kommunikationsdienst unterstützenden Kommunikationssystem verbunden. Bei Erreichen eines zweiten Grenzwertes in Reaktion auf das Vergleichsergebnis wird unter Verwendung der detektierten biometrischen Merkmalsstruktur ein adaptierter biometrischer Abdruck berechnet und für die Identitätskennung zumindest zur Teilnehmerauthentisierung für den angefragten Kommunikationsdienst anstelle des als Referenzabdruck verwendeten biometrischen Abdrucks zugeordnet und gespeichert.

Die Lösung der Erfindung ermöglicht es folglich, grundsätzlich nur einen Trainingszyklus zu durchlaufen und nur einen einzigen biometrischen Abdruck zur Nutzung verschiedener authentifizierungspflichtiger Dienste, welche unterschiedlicher Sicherheitsanforderungen genügen, initialisierend zu erzeugen, so dass in Folge zur Reduzierung der benötigten Komponenten auch nur ein Datenbereich für all diese Dienste genutzt und entsprechend verwaltet werden muss. Allen nachfolgend aufgezeigten Ausführungsformen und Weiterbildungen ist somit gemeinsam, dass für wenigstens zwei authentisierungspflichtige Anwendungen und/oder Teilanwendungen mit unterschiedlichen Sicherheitsstufen nur ein einziger biometrischer Abdruck je Nutzer initialisierend erstellt werden muss, welcher während und/oder nach wenigstens einer Authentisierungsprozedur bei erfolgter Verifizierung und nur bei Einhaltung eines speziell zur Adaption vorgegebenen Grenz- oder Schwellenwertes unter Ausnutzung der während der Verifizierung gewonnenen biometrischen Probe(n) adaptiert wird.

Zum Aktivieren eines solchen Trainingszyklusses ist bevorzugt vorgesehen, vor der Durchführung einer Teilnehmerauthentisierung zu prüfen, ob der identifizierte Teilnehmer als Erstnutzer zu behandeln ist oder, ob für den identifizierten Teilnehmer gegebenenfalls eine von dem Teilnehmer oder der Verifikationseinrichtung mittels Signalisierung angezeigte Rücksetzung durchgeführt werden soll. Ergibt diese Prüfung, dass der Teilnehmer als Erstnutzer zu behandeln ist oder eine Rücksetzung durchgeführt werden soll, wird aus der wenigstens einen biometrischen Merkmalsstruktur ein biometrischer Abdruck berechnet, der für die Identitätskennung zur Teilnehmerauthentisierung der Anzahl von authentisierungspflichtigen Kommunikationsdiensten initialisierend zugeordnet und gespeichert wird.

Zweckmäßiger Weise wird ferner ein jeweils adaptierter biometrischer Abdruck nicht nur unter Verwendung der detektierten biometrischen Merkmalsstruktur sondern unter zusätzlicher Ausnutzung des als Referenzabdruck bei der Authentisierungsprozedur verwendeten biometrischen Abdrucks berechnet und/oder unter zusätzlicher Ausnutzung wenigstens einer gespeicherten biometrischen Probe und/oder biometrischen Merkmalsstruktur basierend auf einer früheren Kommunikationsverbindung mit dem Teilnehmer. Hierdurch wird das Einhalten einer geforderten Qualität bei der Adaption und das Überwachen einer sich allmählich vollziehenden Änderung von biometrischen Merkmalen weiter vereinfacht.

Ein weiterer wesentlicher Vorteil der Erfindung ist ferner darin begründet, dass jetzt bei der Bereitstellung von Kommunikationsdiensten, wie z.B. sogenannten Identity-Provider-Diensten, einheitliche biometrische Abdrücke, insbesondere auch Stimmabdrücke, geschaffen und auch adaptiert werden können, welche für verschiedene Dienste mit unterschiedlichen Sicherheitsstufen genutzt werden können. Insbesondere im Falle standardisierter Datenformate zwischen verschiedenen Datenbereichen und Speichern verschiedener, derartige Kommunikationsdienste unterstützenden Systeme, auch von unterschiedlichen Identity-Providern, welche einheitliche Grenzwerte, gegebenenfalls in ihrer Metrik standardisiert, festgelegt haben, können die erfindungsgemäß geschaffenen biometrische Abdrücke bequem ausgetauscht werden, ohne dass die Grenzwerte unter Umständen separat vorgehalten werden müssen. Gleichzeitig ist nur noch ein einziger Datenbereich für die biometrischen Abdrücke von Nutzern eines oder mehrerer, derartige Kommunikationsdienste unterstützender Systeme notwendig.

Im Rahmen der Erfindung liegt folglich auch eine Vorrichtung mit zur Durchführung des erfindungsgemäßen Verfahrens entsprechend ausgebildeten Einrichtungen sowie ein Speichermedium, mit darauf gespeicherten Signalen, die ausgelesen in einer rechnergestützten und mit einem Telekommunikationsnetz verbundenen Vorrichtung, das Durchführen einer Teilnehmerauthentisierung gemäß erfindungsgemäßen Verfahren bewirken.

Die erfindungsgemäße Vorrichtung zeichnet sich somit zweckmäßigerweise dadurch aus, dass diese eine mit einem Telekommunikationsnetz verbindbare/verbundene Verifikationseinrichtung umfasst, mit einer Einrichtung zum Erfassen von biometrischen Proben von rufenden oder gerufenen Teilnehmern, die jeweils über ein Kommunikationsendgerät, welches zur Übermittlung einer solchen biometrischen Probe entsprechend ausgebildet ist, über das Telekommunikationsnetz mit der Verifikationseinrichtung verbunden sind, sowie mit einer Einrichtung zum Detektieren von biometrischen Merkmalsstrukturen aus erfassten biometrischen Proben, einer Einrichtung zum Berechnen eines biometrischen Abdrucks aus detektierten biometrischen Merkmalsstrukturen und einer Einrichtung zum Speichern von biometrischen Abdrücken für rufende bzw. gerufene Teilnehmer, und wobei die Verifikationseinrichtung ferner eine Vergleichseinrichtung umfasst, zum Vergleichen eines gespeicherten Abdruckes mit wenigstens einem Merkmal einer erfassten biometrischen Merkmalsstruktur, sowie eine Verbindungseinrichtung zum Weiterverbinden eines Teilnehmers in Reaktion auf das Erreichen eines ersten Grenzwertes durch das von der Vergleichseinrichtung ermittelte Vergleichsergebnis, und eine Adaptionseinrichtung zum Berechnen und Speichern eines adaptierten Abdruckes unter Verwendung der detektierten biometrischen Merkmalsstruktur in Reaktion auf das Erreichen eines zweiten Grenzwertes durch das von der Vergleichseinrichtung ermittelte Vergleichsergebnis.

Bevorzugt greift die Adaptionseinrichtung zur Berechnung des adaptierten biometrischen Abdrucks zusätzlich auf den zum Vergleich als Referenzabdruck herangezogenen biometrischen Abdruck und/oder auf wenigstens eine in einem Speicher basierend auf einer früheren Kommunikationsverbindung hinterlegte biometrische Probe und/oder biometrische Merkmalsstruktur des Teilnehmers zu.

Insbesondere, um auch für verschiedene Teilnehmer eines gemeinsam genutzten Kommunikationsendgerätes und/oder Telekommunikationsanschlusses eine erfindungsgemäß gesteuerte Authentisierung anhand biometrischer Merkmale durchzuführen, ist das erfindungsgemäße Verfahren ferner zweckmäßig ausgebildet, ein weiteres Kennungsdatums zu erzeugen und die Identitätskennung um dieses weitere Kennungsdatum zu erweitern, zumindest, wenn der Vergleich zwischen dem Referenzabdruck und der detektierten biometrischen Merkmalsstruktur keinerlei Ähnlichkeit ergibt.

Ferner ist bevorzugt vorgesehen, die Identitätskennung des rufenden Teilnehmers bei verifizierter Identität dem Kommunikationssystem zur Verfügung zu stellen, so dass anhand der Identitätskennung im Wesentlichen ohne zeitliche Verzögerung gegebenenfalls auf weitere, dem Teilnehmer zugeordnete Nutzerprofil-Daten zugegriffen werden kann. Bevorzugte Ausführungsformen sehen vor, dass der erste, zur Verifizierung vorgegebene Grenzwert jeweils in Abhängigkeit der jeweiligen Sicherheitsanforderung des angefragten Kommunikationsdienstes vorgegeben wird.

Insbesondere ist, dass als zweiter, zur Adaption vorgesehener Grenzwert ein vom ersten Grenzwert separater Adaptionsgrenzwert vorgegeben wird.

Ergänzend oder alternativ ist vorgesehen, dass als zweiter, zur Adaption vorgesehener Grenzwert der für eine bestimmte Sicherheitsanforderung vorgegebene erste Grenzwert vorgegeben wird, wobei bevorzugt der für die höchste Sicherheitsanforderung vorgegebene erste Grenzwert vorgeben wird.

Insbesondere, um eine Überprüfung einer vorgenommenen Adaption zur Gewährleistung einer dauerhaft hohen Qualität des biometrischen Abdruckes durchzuführen, sehen weitere erfindungsgemäße Ausführungsvarianten vor, bei erfolgreich verifizierter Identität des Teilnehmers auch das erreichte Vergleichsergebnis bzw. den erreichten Vergleichswert dem Kommunikationssystem zur Verfügung zu stellen, welches den erreichten Vergleichswert gegenüber dem zweiten Grenzwert vergleicht, so dass in Reaktion auf das Vergleichergebnis eine gegebenenfalls von der Verifikationseinrichtung bereits bewirkte Adaption des zum Vergleich herangezogenen biometrischen Abdrucks wieder rückgängig gemacht werden kann.

Hierzu wird in zweckmäßiger Weise der als Referenz-Abdruck zum Vergleich herangezogene Abdruck vor dessen Adaption zwischengespeichert und der zwischengespeicherte Abdruck zum Rückgängigmachen der Adaption wieder ausgelesen und der adaptierte Abdruck durch den ausgelesenen Referenz-Abdruck überschrieben.

Ferner sehen besonders bevorzugte Ausführungsformen vor, einen adaptierten biometrischen Abdruck für die Identitätskennung jeweils zur Teilnehmerauthentisierung für die Anzahl von authentisierungspflichtigen Kommunikationsdiensten zuzuordnen und zu speichern.

Alternative Ausführungsformen sehen hingegen vor, einen adaptierten biometrischen Abdruck für die Identitätskennung in Abhängigkeit der Sicherheitsanforderung des angefragten Kommunikationsdienstes jeweils zur Teilnehmerauthentisierung von authentisierungspflichtigen Kommunikationsdiensten mit derselben Sicherheitsanforderung zuzuordnen und zu speichern.

Gemäß besonders zweckmäßigen Weiterbildungen, wird die Berechnung eines biometrischen Abdruckes, der für die Identitätskennung zur Teilnehmerauthentisierung der Anzahl von authentisierungspflichtigen Kommunikationsdiensten initialisierend zugeordnet und gespeichert wird, in funktionaler Abhängigkeit von Kriterien durchgeführt, die für die höchste Sicherheitsanforderung vorgegebenen sind.

Als eine Identitätskennung, der ein rufender Teilnehmer zur Annahme einer Identität zugeordnet wird, wird insbesondere ein das Kommunikationsendgerät und/oder ein den zur Verbindung des Kommunikationsendgerätes mit dem Telekommunikationsnetz verwendeten Telekommunikationsanschluss identifizierendes Kennungsdatum übermittelt, wobei dem Kommunikationsendgerät und/oder Telekommunikationsanschluss als Kennungsdatum z.B. eine CLI, ANI, HLR, IP-Adresse oder ID-Nummer zur Identifizierung zugeordnet wird.

Als eine alternative, zusätzliche oder erweiterte Identifikationskennung, der ein Teilnehmer bzw. die einem Teilnehmer zur Annahme einer Identität des Teilnehmers zugeordnet wird, wird ein direkt den Teilnehmer, der über das Kommunikationsendgerät mit dem Telekommunikationsnetz verbunden ist, identifizierendes Kennungsdatum an die Verifikationseinrichtung übermittelt, wobei dem Teilnehmer als solches Kennungsdatum z.B. eine PIN zur Identifizierung zugeordnet wird.

In praktischer Weise kann mit dem erfindungsgemäßen Verfahren je nach applikationsspezifischer Ausgestaltung als biometrische Probe eine auf einem akustischen Datum, optischen Datum und/oder Verhaltensdatum basierte biometrische Probe erfasst und für eine Authentisierung weiterverarbeitet werden.

So ist bei der Erfassung der biometrischen Probe insbesondere vorgesehen, in Abhängigkeit der Ausbildung des Kommunikationsendgerätes und der Ausbildung der Verifikationseinrichtung sprachliche Äußerungen, eine Hand, ein Finger, das Gesicht, das Auge und/oder ein Tastaturbedienungsprofil des rufenden Teilnehmers mittels digitalisierender Signale zu erfassen und auszuwerten.

Eine zur Verifikation der Identiät eines rufenden oder gerufenen Teilnehmers im Rahmen der Erfindung verwendete Verifikationseinrichtung ist folglich bevorzugt zur Auswertung von sprachlichen Äußerungen zur Personenerkennung ausgebildet und/oder zur Auswertung von anderen biometrischen Merkmalen, insbesondere von Fingerabdrücken, Gesichtern, Augen, Handschriften, Handformen, Handabdrücken und/oder Tastaturbedienungsprofilen, zur Personenerkennung ausgebildet.

Weitere Merkmale und Vorteile der Erfindung ergeben sich aus der nachfolgenden Beschreibung einiger bevorzugter Ausführungsformen anhand der beigefügten Zeichnungen.

In den Zeichnungen zeigen:
- Fig. 1: ein stark vereinfachtes Gesamtsystem zur Teilnehmerauthentisierung, insbesondere basierend auf einer Auswertung von sprachlichen Äußerungen,
- Fig. 2: eine beispielhafte erfindungsgemäße Struktur zur Verifizierung der Identität eines Teilnehmers, mit einmaligem Training eines biometrischen Abdrucks, der als Referenz-Abdruck beim Vergleich gegenüber mehreren Grenzwerten herangezogen wird, die verschiedenen Sicherheitsstufen ggf. verschiedener Dienste entsprechen, und für dessen Adaption ein separaten Adaptionsgrenzwert vorgegeben wird,
- Fig. 3: eine weitere beispielhafte erfindungsgemäße Struktur zur Verifizierung der Identität eines Teilnehmers, mit einmaligem Training eines biometrischen Abdrucks, der als Referenz-Abdruck beim Vergleich gegenüber mehreren Grenzwerten herangezogen wird, die verschiedenen Sicherheitsstufen ggf. verschiedener Dienste entsprechen, mit Adaption des biometrischen Abdrucks, und mit Rücknahme der Adaption, wenn das Vergleichsergebnis nicht einem separaten Adaptionsgrenzwert genügt,
- Fig. 4: eine weitere beispielhafte erfindungsgemäße Struktur zur Verifizierung der Identität eines Teilnehmers, mit einmaligem Training eines biometrischen Abdrucks, der als Referenz-Abdruck beim Vergleich gegenüber mehreren Grenzwerten herangezogen wird, die verschiedenen Sicherheitsstufen ggf. verschiedener Dienste entsprechen, und für dessen Adaption der jeweilige höchste Grenzwert vorgegeben wird,
- Fig. 5: eine weitere beispielhafte erfindungsgemäße Struktur zur Verifizierung der Identität eines Teilnehmers, mit einmaligem Training eines biometrischen Abdrucks, und der zu mehreren Abdrücken adaptiert wird, wobei für deren Adaption jeweils ein unterschiedlicher Grenzwert vorgegeben wird,
- Fig. 6: eine Beispielstruktur gemäß Stand der Technik zur Verifizierung, mit jeweiligem Training und Adaption eines biometrischen Abdruckes, der dem Grenzwert einer bestimmten Sicherheitsstufe zugeordnet ist, und
- Fig. 7: eine Beispielstruktur gemäß Stand der Technik zur Verifizierung, mit mehrmaligen Training für verschiedene biometrische Abdrücke, und Adaption der biometrischen Abdrücke, die jeweils dem Grenzwert einer bestimmten Sicherheitsstufe zugeordnet sind.

Nachfolgend wird die Erfindung beispielhaft anhand bevorzugter Ausführungsformen näher beschrieben, die als biometrische Merkmale insbesondere sprachliche Äußerungen auswerten. Es wird jedoch ausdrücklich daraufhingewiesen, dass in Abhängigkeit von den, einem Nutzer (8) bzw. rufenden oder gerufenen Teilnehmer zur Verfügung stehenden Kommunikationsendgeräten im Rahmen der Erfindung neben der Sprecherverifizierung, Sprecheridentifikation bzw. Sprecherklassifizierung durch sprachliche Äußerungen des Sprechers auch andere Verfahren zur Personenerkennung und Verifizierung der Identität eines Teilnehmers möglich sind, wie beispielsweise eine Verifizierung mittels Fingerabdruck, Gesicht, Auge, Handschrift, Handform und Handabdruck oder mittels Tastaturbedienungsprofil. Voraussetzung sind jedoch immer entsprechend ausgebildete Kommunikationsendgeräte beim rufenden bzw. gerufenen Teilnehmer und die entsprechenden Erkennungssysteme bei den Verifikationseinrichtungen.

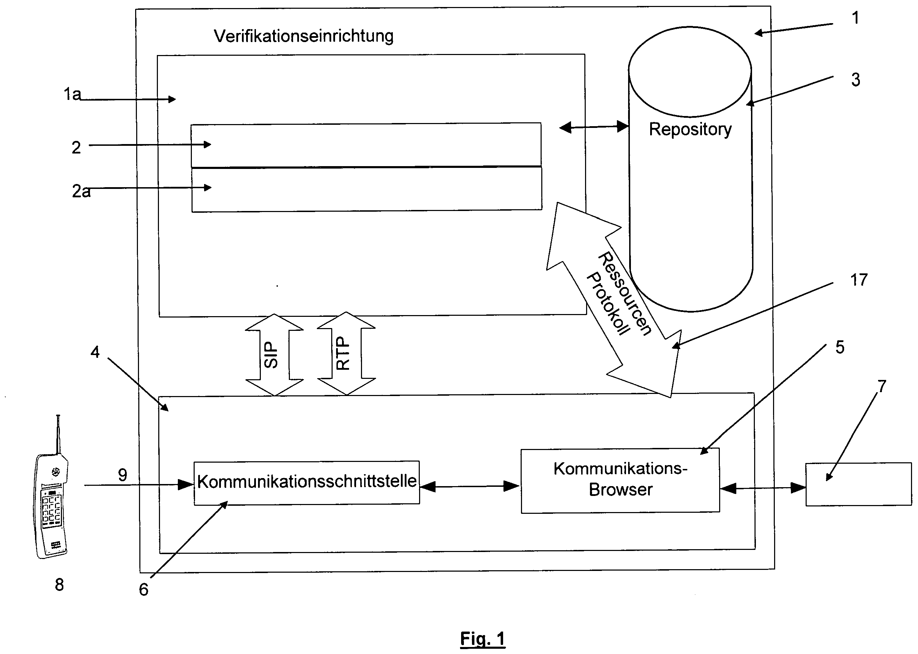

Figur 1 zeigt ein stark vereinfachtes Gesamtsystem zur Verifikation der Identität eines rufenden oder gerufenen Teilnehmers 8 mit Kommunikationsendgerät, zum Beispiel Telefon, Kamera, Computer, Faxgerät etc., durch Auswertung erfasster biometrischer Merkmale. Im Einzelnen kennzeichnet das Bezugszeichen 1 eine Verifikationseinrichtung, welche die erfindungsgemäße Verifikationsplattform oder -ebene bereitstellt, und z.B. zur Personenerkennung durch Auswertung von sprachliche Äußerungen zur Personenerkennung ausgebildet ist. Grundsätzlich kann die erfindungsgemäße Verifikationseinrichtung Teil eines Telekommunikationsnetzes sein oder an ein solches anschaltbar sein.

Zur Durchführung des nachfolgend beschriebenen Verifikationsverfahrens umfasst die bei Fig. 1 dargestellte Verifikationseinrichtung einen Sprachserver 1a, ein Modul 2, welches zur Authentifizierung über biometrische Merkmale das Prinzip der Sprecherverifikation einsetzt, sowie weitere Erkennungsmodule 2a, beispielsweise zur Spracherkennung, zur DTMF-Erkennung und/oder zur Text-zu-Sprache-Wandlung. Ferner ist wenigsten ein Speicher bzw. Repository 3 zur Speicherung von biometrischen Abdrücken und anderer Daten, wie beispielsweise CLI, USER-ID, HLR, IP-Adressen, verschiedener Nutzer bzw. rufender oder gerufener Teilnehmer 8 umfasst. Ferner sind mit dem Bezugszeichen 4 ein Kommunikationsserver mit weiteren Kommunikations-Hilfseinrichtungen gekennzeichnet, so z.B. mit einem Kommunikationsbrowser 5, welcher z.B. ein sogenanntes VoiceXML Interpreter-Modul umfasst, und mit einer Kommunikationsschnittstelle 6, zum Beispiel einer Telefonschnittstelle, über welche die Verifikationseinrichtung 1 mit einem Telekommunikationsnetz verbunden ist und Sprache sowie Nutzer-,Endgeräte- und/oder Anschlusskennungen 9 des Teilnehmers 8 übermittelt werden. Der Datenaustausch zwischen dem Kommunikationsserver 4 und dem Sprachserver 1a erfolgt z.B. zur Signalisierung über SIP (Session Initiation Protocol), zur Sprachübertragung über RTP (Realtime Transport Protocol) und zur Steuerung der Ressourcen über ein geeignetes Ressourcen Protokoll 17.

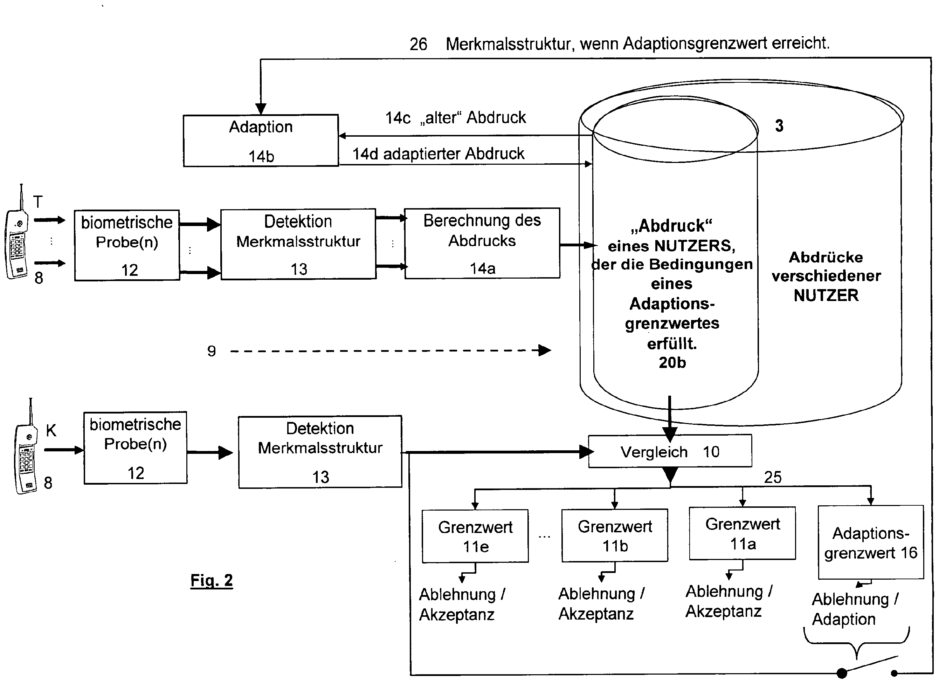

Mit dem Bezugszeichen 7 ist ein Kommunikationssystem gekennzeichnet, welches eine Applikationsebene zur Unterstützung von authentisierungspflichtigen Kommunikationsdiensten mit unterschiedlichen Sicherheitsanforderungen bereitstellt und z.B. einen Web-/Anwendungsserver umfasst. Der Teilnehmer 8 wird nach erfolgreicher, nachfolgend unter Bezugnahme auf die Figuren 2 bis 5 beschriebener Teilnehmerauthentisierung durch die Verifikationseinrichtung 1 zu dem Kommunikationssystem 7 verbunden bzw. weiter vermittelt.

Die Figuren 2 bis 5 zeigen aus Gründen der Anschaulichkeit vereinfachte Strukturen verschiedener bevorzugter, jedoch lediglich beispielhafter Ausführungsvarianten zur erfindungsgemäß gesteuerten Verifizierung der Identität eines Teilnehmers 8, der über ein Kommunikationsendgerät über wenigstens ein Telekommunikationsnetz mit der Verifikationseinrichtung 1 (Fig. 1) verbunden ist, anhand wenigstens eines biometrischen Merkmals zur Verbindung des Teilnehmers mit einem solchen Kommunikationssystem, das wenigstens einen authentisierungspflichtigen Kommunikationsdienst aus einer Anzahl von authentisierungspflichtigen Kommunikationsdiensten mit unterschiedlichen Sicherheitsanforderungen unterstützt.

Nach dem Herstellen einer Kommunikationsverbindung zwischen dem Teilnehmer 8 und der mit einem Telekommunikationsnetz verbundenen Verifikationseinrichtung 1 erfolgt zur Annahme einer Identität des Teilnehmers eine Zuordnung zwischen einer ermittelten Identitätskennung 9 und dem Teilnehmer. Im Fall eines rufenden Teilnehmers wird z.B. eine Identitätskennung 9 übermittelt, welche dem Teilnehmer zugeordnet wird. Durch die Übermittlung der Identitätskennung wird somit eine Identität des rufenden Teilnehmer angenommen. Im Fall eines gerufenen Teilnehmers kann dieser z.B. auch einer zur Rufaktivierung im voraus ermittelten Identitätskennung zugeordnet werden.

Als Identitätskennung 9, welche das Kommunikationsendgerät und/oder den zur Verbindung des Kommunikationsendgerätes mit dem Telekommunikationsnetz verwendeten Telekommunikationsanschluss identifiziert kann z.B. eine CLI, ANI, HLR, IP-Adresse oder ID-Nummer als Kennungsdatum übermittelt werden. Als eine Identitätskennung 9, welche den Teilnehmer direkt identifiziert, kann z.B. eine PIN als Kennungsdatum übermittelt werden.

Ferner wird von dem Teilnehmer 8 eine Anfrage zur Nutzung wenigstens eines authentisierungspflichtigen Kommunikationsdienstes zur Verifikationseinrichtung übermittelt und von der Verifikationseinrichtung wenigstens eine biometrische Probe 12 des rufenden Teilnehmers erfasst und eine biometrische Merkmalsstruktur aus der biometrischen Probe detektiert 13. Erfolgt die Anfrage z.B. durch sprachliche Äußerungen können diese gleichzeitig als biometrische Probe erfasst werden. Erfolgt die Anfrage z.B. durch Eingabe mittels einer Tastatur, kann z.B. die Art der Tastaturbedienung als biometrische Probe erfasst werden.

Anhand der ermittelten Identitätskennung 9 wird zunächst überprüft, ob für diese bereits einmal aus wenigstens einer biometrischen Merkmalsstruktur ein biometrischer Abdruck für die Identitätskennung initialisierend berechnet, zugeordnet und gespeichert worden ist. Ergibt diese Überprüfung, dass ein solcher biometrischer Abdruck für die Identitätskennung noch nicht initialisierend berechnet, zugeordnet und gespeichert worden ist, wird von der Verifikationseinrichtung ein Trainingsprozess T aktiviert, während dessen mindestens eine biometrische Probe 12 erfasst, hieraus Merkmalsstrukturen detektiert 13 und ein initialisierender biometrischer Abdrucks für die Identitätskennung 9 berechnet 14a wird. Als biometrische Probe für den Trainingsprozess T können z.B. sprachliche Äußerungen während der vorbeschriebenen Übermittlung der Anfrage erfasst werden. Der aus der wenigstens einen detektierten biometrischen Merkmalsstruktur berechnete initialisierende biometrische Abdruck wird durch die Identitätskennung 9 indiziert in einem Datenbereich des Speichers 3 gespeichert.

Anwendungsspezifisch kann ein solcher Trainingsprozess T gegebenenfalls auch aktiviert werden, wenn der Teilnehmer oder die Verifikationseinrichtung ein Rücksetzen bzw. Neutraining anfordern, welches dann durch eine geeignete Signalisierung angezeigt wird.

Bei einem späteren Kontakt K des Teilnehmers 8 oder bei Aktivierung der Prozedur für einen solchen Kontakt K unmittelbar nach Beendigung des Trainingsprozesses T, kann dessen aufgrund der ermittelten Identitätskennung 9 angenommene Identität in einem Authentisierungsverfahren verifiziert werden. Auch für die Prozedur eines solchen Kontakts K, während dessen biometrische Proben 12 erfasst und wiederum Merkmalsstrukturen detektiert 13 werden, können als biometrische Probe z.B. sprachliche Äußerungen während der vorbeschriebenen Übermittlung der Anfrage erfasst werden.

Der initialisierende biometrische Abdruck wird nur einmal berechnet und durch die Kennung 9 indiziert zur Teilnehmerauthentisierung für alle bestehenden und zukünftigen Dienste mit unterschiedlichen Sicherheitsanforderungen abgespeichert und bildet die Basis für alle weiteren nachfolgend adaptierten biometrischen Abdrücke für die selbe Kennung 9.

Allen in den Figuren 2 bis 5 dargestellten Strukturen ist gemeinsam, dass bei der Durchführung des Authentisierungsprozesses für den angefragten Kommunikationsdienst der für die Identitätskennung 9 initialisierend zugeordnete und gespeicherte biometrische Abdruck 20a, 20b oder 20c oder ein für die Identitätskennung 9 nachfolgend zugeordneter und gespeicherter, adaptierter biometrischer Abdruck 20a, 20b, 21c, 22c zur Teilnehmerauthentisierung zumindest für den angefragten Kommunikationsdienst als Referenzabdruck mit wenigstens einem Merkmal der während der Kontaktphase K detektierten biometrischen Merkmalsstruktur 13 mittels einer von der Verifikationseinrichtung umfassten Vergleichseinrichtung 10 verglichen wird.

Als Vergleichsergebnis 25 wird zunächst ein Ähnlichkeitsmaß, eine Kennzahl, ein Score oder ein sonstiger errechneter Vergleichswert ausgegeben. Dieser Vergleichswert 25 wird daraufhin gegenüber einen Grenzwert überprüft, wobei für jede unterschiedliche Sicherheitsstufe eines angefragten authentisierungspflichtigen Kommunikationsdienstes ein bestimmter Grenzwert vorgegeben wird, den der Vergleichswert 25 einhalten bzw. erreichen muss, damit in Folge die Identität des Teilnehmers 8 für den angefragten Kommunikationsdienst erfolgreich verifiziert und der rufende Teilnehmer mit dem diesen angefragten Kommunikationsdienst unterstützenden Kommunikationssystem verbunden werden kann. In den Figuren 2 bis 5 ist z.B. für Dienste mit höchster Sicherheitsstufe der Grenzwert 11a vorgegeben, für Dienste mit mittel-hoher Sicherheitsstufe der Grenzwert 11b und für Dienste mit niedrigster Sicherheitsstufe der Grenzwert 11e vorgegeben. Ist der jeweilige Grenzwert eingehalten bzw. erreicht, wird also die Anfrage für einen Dienst mit entsprechender Sicherheitsanforderung akzeptiert und der Teilnehmer entsprechend weiterverbunden.

Beispielsweise ist unter der Annahme, dass der Maximalwert oder Bestwert des Vergleichsergebnisses 1.0 beträgt, der Grenzwert 11a mit 0,99 vorgegeben, der Grenzwert 11b mit 0,98 und der Grenzwert 11e mit 0,93 vorgegeben. Ist zum Beispiel die Sicherheitsstufe für einen angefragten Dienst, welcher z.B. eine Anwendung oder Teilanwendung sein kann, als mittel-hohe Sicherheitsstufe festgelegt worden, so wird ein sich verifizierender Nutzer für die Anwendung nur akzeptiert, wenn das Vergleichsergebnis zumindest den Wert 0.98 erreicht.

In zweckmäßiger Weise wird die Identitätskennung um ein weiteres Kennungsdatum erweitert und entsprechend abgespeichert sowie an den Teilnehmer übermittelt, zumindest wenn der Vergleich zwischen dem Referenzabdruck und der erfassten biometrischen Merkmalsstruktur keinerlei Ähnlichkeit ergibt, so dass gegebenenfalls auch mehrere Teilnehmer des selben Kommunikationsgerätes und/oder Telekommunikationsanschlusses individuell identifiziert werden können.

Unterschiede der in den Figuren 2 bis 5 dargestellten erfindungsgemäßen Ausführungsvarianten werden nachfolgend beschrieben.

Gemäß der in Figur 2 gezeigten Ausführungsvariante, wird für alle Dienste für eine Adaption des einen gespeicherten biometrischen Abdruckes 20b während und/oder nach der Verifizierung ein einheitlicher, separater Adaptionsgrenzwert 16 für das Vergleichsergebnis 25 festgelegt. Dieser Adaptionsgrenzwert 16 kann z.B. dem ersten Grenzwert 11a für die höchste Sicherheitsstufe aller nutzbaren Dienste entsprechen.

Hat sich ein Teilnehmer 8 somit für einen Dienst mit niedrigerer Sicherheitsstufe, also z.B. gegenüber dem ersten Grenzwert 11b zwar erfolgreich authentisiert, entspricht jedoch das Ergebnis der Authentifizierung nicht dem erforderlichen Adaptionsgrenzwert 16, so wird die dabei erfasste biometrische Probe nicht zur Adaption des für alle Dienste einheitlichen biometrischen Abdrucks 20b im Datenbereich des Speichers 3 herangezogen. Eine Adaption wird nur vollzogen, wenn die erfasste biometrische Probe zusätzlich auch dem für die Adaption vorgegebenen zweiten Grenzwert 16 genügt. Dabei erfolgt die Entscheidung darüber innerhalb des Authentifizierungsalgorithmus der Einrichtung 2 selbst, welche z.B. als einmaligen Initialisierungswert einen einheitlichen Adaptionsgrenzwert von dem Kommunikationssystem 7 mitgeteilt bekommt. D.h. beim Vergleich einer aktuell detektierten Merkmalsstruktur 13 mit dem einmalig trainierten und berechneten biometrischen Abdruck wird das Vergleichsergebnis 25 sowohl gegen den für den angefragten Dienst gültigen ersten Grenzwert als auch gegen den Adaptionsgrenzwert 16 verglichen.

Der separat geführte Adaptionsgrenzwert 16 kann dabei zweckmäßig dem Grenzwert 11a der höchsten Sicherheitsstufe entsprechen.

Erreicht das Vergleichsergebnis 25 den Adaptionsgrenzwert 16 wird die aktuell detektierte Merkmalsstruktur, wie mit der Bezugsziffer 26 gekennzeichnet, zur Adaption 14b eines neuen biometrischen Abdrucks herangezogen. Gemäß der dargestellten zweckmäßigen Ausführungsvariante wird ferner der gespeicherte biometrische Abdruck 20b als "alter" oder zu adaptierender Abdruck 14c aus dem Datenbereich ausgelesen und zur Adaption 14b des neuen biometrischen Abdrucks herangezogen. Der neue adaptierte biometrische Abdruck 14d wird anschließend wieder als für alle Dienste einheitlicher biometrischer Abdrucks 20b im Datenbereich des Speichers 3 gespeichert.

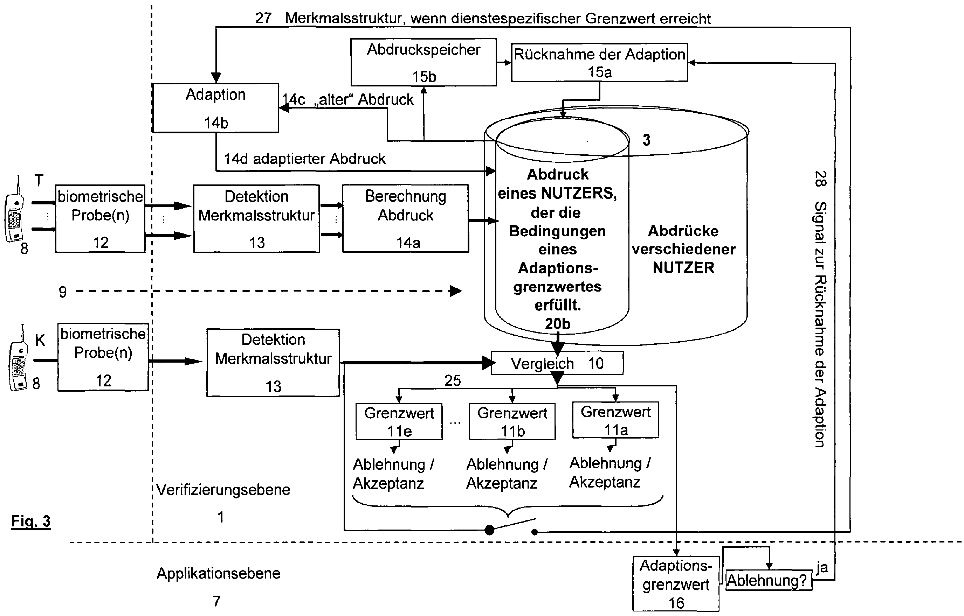

Gemäß der in Figur 3 gezeigten Ausführungsvariante wird verifiziert, wenn das Vergleichsergebnis 25 den jeweiligen dienstespezifischen Grenzwert 16 erreicht. Gegebenenfalls erfolgt in diesem Fall auch eine Adaption des für alle Dienste einheitlichen biometrischer Abdrucks 20b, wobei die aktuell detektierte Merkmalsstruktur, wie mit der Bezugsziffer 27 gekennzeichnet, und der gespeicherte biometrische Abdruck 20b als "alter" oder zu adaptierender Abdruck 14c zur Adaption 14b des neuen biometrischen Abdrucks herangezogen wird, und der neue adaptierte biometrische Abdruck 14d anschließend wieder als für alle Dienste einheitlicher biometrischer Abdrucks 20b im Datenbereich des Speichers 3 gespeichert wird.

Hierbei bekommt das Kommunikationssystem 7 des entsprechend angefragten Dienstes das erreichte Vergleichsergebnis 25 von der Verifikationseinrichtung mitgeteilt und führt selbst den Vergleich des Vergleichsergebnisses 25 mit einem vorgegebenen Grenzwert 16 zur Adaption, welcher zweckmäßig für alle Dienste einheitlich ist und/oder dem ersten Grenzwert 11a der höchsten Sicherheitsstufe entspricht, durch. Ist nun die Authentifizierung für einen Dienst mit niedrigerer Sicherheitsstufe zwar erfolgreich und genügt aber das Vergleichsergebnis nicht dem vorgegebenen Adaptionsgrenzwert 16, so wird eine ggf. schon vorgenommene Adaption des biometrischen Abdrucks 20b wieder verworfen bzw. nicht zugelassen. Dazu kann der "alte" oder zu adaptierende Abdruck in einem Speicher 15b zwischengespeichert werden und in Reaktion auf ein von dem Kommunikationssystem übermitteltes Signal 28 zur Rücknahme der Adaption wieder ausgelesen werden und der gerade gespeicherte adaptierte biometrische Abdruck 20b wieder durch den vor der Adaption im Abdruckspeicher 15b abgespeicherten "alten" biometrischen Abdruck zur Rücknahme der Adaption 15a überschrieben werden. Folglich ist wiederum, wie bei der Ausführungsvariante gemäß Figur 2, garantiert, dass der für eine Teilnehmerauthentisierung zum Vergleich zu verwendende biometrische Abdruck 20b stets die Vorschriften des separaten Adaptionswertes erfüllt.

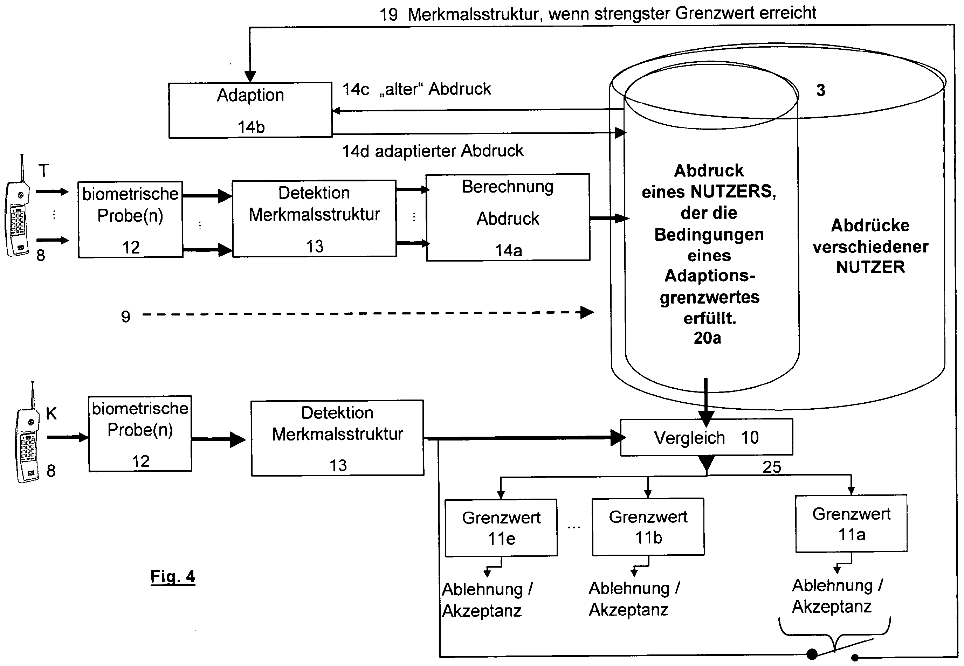

Gemäß der in Figur 4 gezeigten Ausführungsvariante wird der initiale Trainingsprozess zur Erstellung des biometrischen Abdrucks 20a z.B. nur nach den Kriterien der höchsten Sicherheitsstufe durchgeführt. Eine Adaption des biometrischen Abdrucks 20a ist in jedem Fall nur dann zulässig, wenn der Teilnehmer 8 sich für einen Dienst mit der höchsten Sicherheitsstufe, also gegenüber dem ersten Grenzwert 11a erfolgreich authentifiziert hat.

Erreicht das Vergleichsergebnis 25 den höchsten Grenzwert 11a wird die aktuell detektierte Merkmalsstruktur, wie mit der Bezugsziffer 19 gekennzeichnet, zur Adaption 14b eines neuen biometrischen Abdrucks herangezogen. Ferner wird der gespeicherte biometrische Abdruck 20a als "alter" bzw. zu adaptierender Abdruck 14c zur Adaption 14b des neuen biometrischen Abdrucks herangezogen. Der neue adaptierte biometrische Abdruck 14d wird anschließend wieder als für alle Dienste einheitlicher biometrischer Abdrucks 20a im Datenbereich des Speichers 3 gespeichert. Folglich ist bei der Ausführungsvariante gemäß Figur 4 garantiert, dass der für eine Teilnehmerauthentisierung zum Vergleich zu verwendende biometrische Abdruck 20a stets die Vorschriften des Grenzwertes 11a der höchsten Sicherheitsstufe erfüllt.

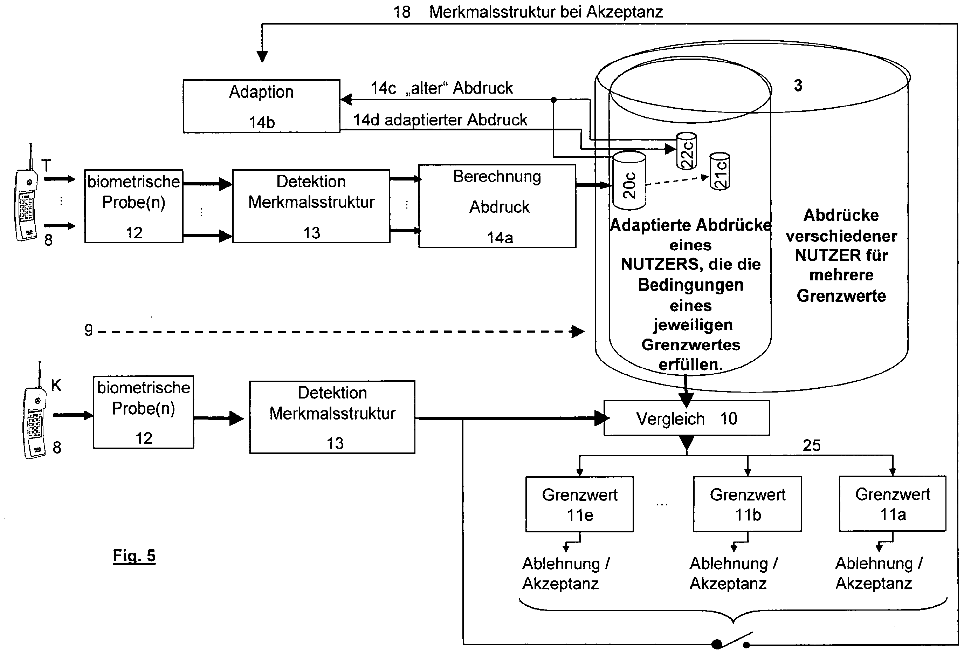

Auch gemäß der in Figur 5 gezeigten Ausführungsvariante wird wiederum nur ein einziger biometrischer Abdruck eines Teilnehmers 8 während eines einmaligen Trainingsprozesses T berechnet 14a und als biometrischer Abdruck 20c durch die Identitätskennung 9 indiziert zur Authentisierung des entsprechend identifizierten Teilnehmers 9 für alle der festgelegten oder erweiterbaren Anzahl von authentisierungspflichtigen Kommunikationsdiensten in einem Datenbereich des Speichers 3 gespeichert.

Im Gegensatz zu den Ausführungsvarianten gemäß den Figuren 2 bis 4, wird der biometrische Abdruck 20c als solcher jedoch nicht mehr verändert bzw. adaptiert. Der biometrische Abdruck 20c wird von der Verifikationseinrichtung als Masterabdruck bei nachfolgenden Adaptionsprozeduren verwendet und dient somit als Grundlage für verschiedene adaptierte biometrische Abdrücke 21c, 22c des Teilnehmers 8, die beim Vergleich 10 für verschiedene Sicherheitsstufen eingesetzt werden.

Bei einer ersten Kontaktphase K zur Authentisierung des Teilnehmers 8 für einen Dienst mit bestimmter Sicherheitsstufe, z.B. mit mittlerer Sicherheitsstufe, wird der biometrische Abdruck 20c zum Vergleich mit der aktuell detektierten Merkmalstruktur 13 herangezogen und das Vergleichsergebnis 25 gegenüber dem der Sicherheitsstufe entsprechend zugeordneten Grenzwert, z.B. dem Grenzwert 11b, überprüft. Ferner wird in diesem Fall der für diese bestimmte Sicherheitsstufe vorgegebene erste Grenzwert 11b, auch als Adaptionsgrenzwert vorgegeben. Genügt das Vergleichsergebnis 25 dem Grenzwert 11b ist der Teilnehmer 8 zur Nutzung des Dienstes autorisiert und wird mit dem diesen Dienst unterstützenden Kommunikationssystem verbunden. Zusätzlich wird, da das Vergleichsergebnisses 25 folglich auch den gleichen Adaptionsgrenzwert erreicht, die aktuell detektierte Merkmalsstruktur, wie mit der Bezugsziffer 18 gekennzeichnet, zur Adaption 14b eines neuen biometrischen Abdrucks herangezogen. Ferner wird der gespeicherte biometrische Abdruck 20c als "alter" oder zu adaptierender Abdruck 14c zur Adaption 14b eines neuen biometrischen Abdrucks herangezogen. Der neue adaptierte biometrische Abdruck 14d wird anschließend als für alle Dienste mit dieser einen bestimmten Sicherheitsstufe, d.h. im vorliegenden Fall für alle Dienste, für welche der Grenzwert 11b zur Authentisierung vorgebeben wird, einheitlicher biometrischer Abdrucks 22c im Datenbereich des Speichers 3 gespeichert. Bei nachfolgenden Kontaktphasen K zur Authentisierung des Teilnehmers 8 für einen Dienst mit dieser Sicherheitsstufe, wird der biometrische Abdruck 22c zum Vergleich mit der dann aktuell detektierten Merkmalstruktur 13 herangezogen und das Vergleichsergebnis 25 gegenüber dem Grenzwert 11b überprüft. Bei Akzeptanz des Teilnehmers 8 während einer solchen weiteren Authentifizierung in dieser Sicherheitsstufe kann dann in jedem Fall der veränderliche biometrische Abdruck 22c dieser Sicherheitsstufe wieder entsprechend adaptiert werden, d.h. der gespeicherte biometrische Abdruck 22c wird als "alter" oder zu adaptierender Abdruck 14c aus dem Datenbereich ausgelesen und zur Adaption 14b eines neuen biometrischen Abdrucks herangezogen. Der neue adaptierte biometrische Abdruck 14d wird anschließend wieder als für alle Dienste, für welche der Grenzwert 11b zur Authentisierung vorgebeben wird, einheitlicher biometrischer Abdrucks 22c im Datenbereich des Speichers 3 gespeichert. Sollte sich hierbei mit der Zeit u.U. die Qualität des biometrischen Abdrucks 22c verringern, ist die Verifikationseinrichtung in zweckmäßiger Weise zur erneuten Durchführung einer Adaption gemäß der vorbeschriebenen ersten Kontaktphase K angepasst.

In Abwandlung zu der in Fig. 5 dargestellten Ausführungsvariante kann der von der

Verifikationseinrichtung als Masterabdruck verwendete biometrische Abdruck 20c auch initial als biometrische Abdrücke 21c, 22c des Teilnehmers 9 kopiert und gespeichert werden. Zum Vergleich herangezogen und adaptiert werden dann nur noch die Kopien sowohl bei einer ersten Kontaktphase K als auch bei nachfolgenden Kontaktphasen K zur Authentisierung des Teilnehmers 8.

Allen beschriebenen erfindungsgemäßen Ausführungsvarianten ist somit gemeinsam, dass für unterschiedliche Sicherheitsstufen nur einmal ein einziger biometrischer Abdruck je Teilnehmer initialisierend erstellt wird, welcher während und/oder nach mindestens einer Verifizierungsphase bei Einhaltung mindestens eines vorgegebenen Grenzwertes unter Ausnutzung der während der Verifizierung gewonnenen biometrischen Proben adaptiert wird. Dabei ist den Ausführungsvarianten gemäß Figuren 2 bis 4 gemeinsam, dass für die Adaption des biometrisches Abdrucks auch für unterschiedliche Sicherheitsstufen mit unterschiedlichen Verifizierungsgrenzwerten nur ein einziger Adaptionsgrenzwert eingehalten werden muss, welcher bevorzugt zumindest dem Verifizierungsgrenzwert der höchsten Sicherheitsstufe entsprechen wird.

Auch wenn die Erfindung anhand von Ausführungsvarianten beschrieben ist, bei denen jeweils ein als Referenzabdruck herangezogener gespeicherter biometrischer Abdruck als "alter" oder zu adaptierender Abdruck 14c auch zur Adaption 14b eines neuen biometrischen Abdrucks herangezogen wird, ist dies für die Erfindung weder zwingend noch einschränkend. Eine Adaption kann grundsätzlich auch durchgeführt werden ohne, dass ein als Referenzabdruck bei der Authentisierungsprozedur verwendeter biometrischer Abdruck in die Berechnung eines neuen adaptierten biometrischen Abdrucks mit einbezogen wird. Sind ferner applikationsspezifisch basierend auf einer früheren Kommunikationsverbindung mit dem Teilnehmer wenigstens eine biometrische Probe und/oder biometrische Merkmalsstruktur des Teilnehmer gespeichert, kann z.B. auch eine solche Probe und/oder Merkmalsstruktur in die Berechnung eines neuen adaptierten biometrischen Abdrucks mit einbezogen werden.

Der erfindungsgemäße Prozess der Adaption kann zum Beispiel dazu genutzt werden, einen biometrischen Abdruck an eine sich allmählich vollziehende Änderung des biometrischen Merkmals des selben Nutzers/Teilnehmers zu adaptieren. Also beispielsweise den Stimmabdruck an eine sich verändernde Stimme. Da die Verifikationseinrichtung folglich komplexe Verarbeitungsschritte zur Teilnehmerauthentisierung ausführen muss, ist eine software-gestützte Implementierung der Verifikationseinrichtung zur Durchführung der Verarbeitungsabläufe, z.B. mittels eines Speichermediums, mit darauf gespeicherten Signalen, die hiezu in einer rechnergestützten und mit einem Telekommunikationsnetz verbundenen Vorrichtung ausgelesen werden, zweckmäßig.

## Patentansprüche

1. Verfahren zur gesteuerten Verifizierung der angenommenen Identität eines rufenden und/oder gerufenen Teilnehmers (8), der über ein Kommunikationsendgerät mit einem Telekommunikationsnetz verbunden ist, anhand wenigstens eines biometrischen Merkmals zur Verbindung des Teilnehmers mit einem Kommunikationssystem (7), das eine Anzahl von wenigstens zwei authentisierungspflichtigen Kommunikationsdiensten mit unterschiedlichen Sicherheitsanforderungen unterstützt; wobei nach
Herstellen einer Kommunikationsverbindung zwischen dem Teilnehmer (8) und einer mit dem Telekommunikationsnetz verbundenen Verifikationseinrichtung (1), eine ermittelte Identitätskennung (9) und der Teilnehmer (8) zu dessen Identifizierung einander zugeordnet werden, eine Anfrage zur Nutzung wenigstens eines der authentisierungspflichtigen Kommunikationsdienste zur Verifikationseinrichtung übermittelt wird, wenigstens eine biometrische Probe (12) des Teilnehmers erfasst und eine biometrische Merkmalsstruktur aus der biometrischen Probe detektiert (13) wird;
und wobei bei der Durchführung einer Teilnehmerauthentisierung für den angefragten Kommunikationsdienst ein für die Identitätskennung initialisierend zugeordneter und gespeicherter biometrischer Abdruck (20a, 20b, 20c) zur Teilnehmerauthentisierung der Anzahl von authentisierungspflichtigen Kommunikationsdiensten als Referenzabdruck mit wenigstens einem Merkmal der detektierten biometrischen Merkmalsstruktur verglichen wird,
bei Erreichen eines ersten Grenzwertes (11a, 11b, ..., 11e) in Reaktion auf das Vergleichsergebnis (25) die Identifizierung des rufenden Teilnehmers (8) für den angefragten Kommunikationsdienst verifiziert und der rufende Teilnehmer mit dem diesen angefragten Kommunikationsdienst unterstützenden Kommunikationssystem (7) verbunden wird, und bei Erreichen eines zweiten Grenzwertes (16, 11a, 11b, ..., 11e) in Reaktion auf das Vergleichsergebnis (25) unter Verwendung der detektierten biometrischen Merkmalsstruktur (18, 19, 26, 27) ein adaptierter biometrischer Abdruck berechnet (14b) und für die Identitätskennung zur Teilnehmerauthentisierung für die Anzahl von authentisierungspflichtigen Kommunikationsdiensten anstelle des als Referenzabdruck verwendeten biometrischen Abdrucks (14c) zugeordnet und gespeichert (14d) wird, **dadurch gekennzeichnet, daß**
a) der zweite Grenzwert für die Anzahl der wenigstens zwei authentisierungspflichtigen Kommunikationsdienste einheitlich ist,
und/oder wobei
- bei verifizierter Identität des Teilnehmers der erreichte Vergleichswert (25) dem Kommunikationssystem zur Verfügung gestellt wird, der erreichte Vergleichswert von dem Kommunikationssystem gegenüber einem zweiten Grenzwert (16) verglichen wird, welcher für die Anzahl der wenigstens zwei authentisierungspflichtigen Kommunikationsdienste einheitlich ist und/oder dem ersten Grenzwert der höchsten Sicherheitsstufe entspricht, und in Reaktion auf das Vergleichsergebnis eine gegebenenfalls von der Verifikationseinrichtung bereits bewirkte Adaption des als Referenzabdruck verwendeten biometrischen Abdrucks wieder rückgängig (15a) gemacht wird.

2. Verfahren nach Anspruch 1, wobei der adaptierte biometrische Abdruck unter zusätzlicher Verwendung des als Referenzabdruck verwendeten biometrischen Abdrucks (14c) und/oder von wenigstens einer gespeicherten biometrischen Probe (12) und/oder biometrischen Merkmalsstruktur basierend auf einer früheren Kommunikationsverbindung mit dem Teilnehmer berechnet wird.

3. Verfahren nach einem der vorstehenden Ansprüche, wobei vor der Durchführung einer Teilnehmerauthentisierung geprüft wird, ob der identifizierte Teilnehmer als Erstnutzer zu behandeln ist oder, ob für den identifizierten Teilnehmer eine von dem Teilnehmer oder der Verifikationseinrichtung mittels Signalisierung angezeigte Rücksetzung durchgeführt werden soll, wobei aus der wenigstens einen biometrischen Merkmalsstruktur ein biometrischer Abdruck (20a, 20b, 20c) berechnet wird, der für die Identitätskennung zur Teilnehmerauthentisierung der Anzahl von authentisierungspflichtigen Kommunikationsdiensten initialisierend zugeordnet und gespeichert wird, wenn die Prüfung ergibt, dass der Teilnehmer als Erstnutzer zu behandeln ist oder eine Rücksetzung durchgeführt werden soll.

4. Verfahren nach einem der vorstehenden Ansprüche, wobei, wenn der Vergleich zwischen dem Referenzabdruck und der erfassten biometrischen Merkmalsstruktur keinerlei Ähnlichkeit ergibt, eine weiteres Kennungsdatum erzeugt und die Identitätskennung um dieses weitere Kennungsdatum erweitert wird.

5. Verfahren nach einem der vorstehenden Ansprüche, wobei die Identitätskennung des Teilnehmers bei verifizierter Identität dem Kommunikationssystem zur Verfügung gestellt wird.

6. Verfahren nach einem der vorstehenden Ansprüche, wobei der erste Grenzwert in Abhängigkeit der jeweiligen Sicherheitsanforderung des angefragten Kommunikationsdienstes vorgegeben wird.

7. Verfahren nach einem der vorstehenden Ansprüche, wobei als zweiter Grenzwert ein vom ersten Grenzwert separater Adaptionsgrenzwert (16) vorgegeben wird.

8. Verfahren nach einem der vorstehenden Ansprüche, wobei als zweiter Grenzwert der für eine bestimmte Sicherheitsanforderung vorgegebene erste Grenzwert, insbesondere der für die höchste Sicherheitsanforderung vorgegebene Grenzwert, vorgegeben wird.

9. Verfahren nach einem der vorstehenden Ansprüche, wobei vor der Adaption des als Referenzabdruck herangezogenen biometrischen Abdruckes dieser zwischengespeichert (15b) wird, und wobei der zwischengespeicherte Referenzabdruck zum Rückgängigmachen der Adaption wieder ausgelesen und der adaptierte Referenzabdruck durch den ausgelesenen Referenzabdruck überschrieben wird.

10. Verfahren nach einem der vorstehenden Ansprüche, wobei für die Berechnung eines biometrischen Abdruckes der für die Identitätskennung zur Teilnehmerauthentisierung der Anzahl von authentisierungspflichtigen Kommunikationsdiensten initialisierend zugeordnet und gespeichert wird, eine Funktion in Abhängigkeit von Kriterien der höchsten Sicherheitsanforderung vorgegeben wird.

11. Verfahren nach einem der vorstehenden Ansprüche, wobei als Identitätskennung ein das Kommunikationsendgerät und/oder ein den zur Verbindung des Kommunikationsendgerätes mit dem Telekommunikationsnetz verwendeten Telekommunikationsanschluss identifizierendes Kennungsdatum ermittelt wird.

12. Verfahren nach vorstehendem Anspruch, wobei als Kennungsdatum eine CLI, ANI, HLR, IP-Adresse oder ID-Nummer zugeordnet wird.

13. Verfahren nach einem der vorstehenden Ansprüche, wobei als Identitätskennung ein den rufenden Teilnehmer, der über das Kommunikationsendgerät mit dem Telekommunikationsnetz verbunden ist, identifizierendes Kennungsdatum ermittelt wird.

14. Verfahren nach vorstehendem Anspruch, wobei als Kennungsdatum eine PIN zugeordnet wird.

15. Verfahren nach einem der vorstehenden Ansprüche, wobei als biometrische Probe eine auf einem akustischen Datum, optischen Datum und/oder Verhaltensdatum basierte biometrische Probe erfasst wird.

16. Verfahren nach einem der vorstehenden Ansprüche, wobei zur Erfassung der biometrischen Probe in Abhängigkeit der Ausbildung des Kommunikationsendgerätes und der Ausbildung der Verifikationseinrichtung sprachliche Äusserungen, eine Hand, ein Finger, das Gesicht, das Auge und/oder ein Tastaturbedienungsprofil des rufenden Teilnehmers mittels digitalisierender Signale erfasst wird.

17. Vorrichtung mit zur Durchführung des Verfahrens nach einem der vorstehenden Ansprüche ausgebildeten Einrichtungen.

18. Vorrichtung nach vorstehendem Anspruch, welche eine mit einem Telekommunikationsnetz verbindbare/verbundene Verifikationseinrichtung (1) umfasst, wobei die Verifikationseinrichtung Einrichtungen (1a, 2, 2a, 3, 4, 5, 6, 10, 11, 13, 14) umfasst,
zum Erfassen von biometrischen Proben von rufenden und/oder gerufenen Teilnehmern, die jeweils über ein Kommunikationsendgerät, welches zur Übermittlung einer solchen biometrischen Probe entsprechend ausgebildet ist, über das Telekommunikationsnetz mit der Verifikationseinrichtung verbunden sind,
zum Detektieren einer biometrischen Merkmalsstruktur aus einer erfassten biometrischen Probe,
zum Berechnen eines biometrischen Abdrucks aus wenigstens einer detektierten biometrischen Merkmalsstruktur,
zum Speichern von biometrischen Abdrücken für rufende und/oder gerufene Teilnehmer,
zum Vergleichen eines gespeicherten biometrischen Abdruckes mit wenigstens einem Merkmal einer detektierten biometrischen Merkmalsstruktur,
zum Weiterverbinden eines Teilnehmers in Reaktion auf das Erreichen eines ersten Grenzwertwertes durch das von der Vergleichseinrichtung ermittelte Vergleichsergebnis, und zum Berechnen und Speichern eines adaptierten Abdruckes unter Verwendung der detektierten biometrischen Merkmalstruktur in Reaktion auf das Erreichen eines zweiten Grenzwertes durch das von der Vergleichseinrichtung ermittelte Vergleichsergebnis.

19. Vorrichtung nach vorstehendem Anspruch, wobei die Einrichtung zur Berechnung des adaptierten biometrischen Abdrucks zusätzlich auf den zum Vergleich herangezogenen biometrischen Abdruck (14c) und/oder auf wenigstens eine in einem Speicher basierend auf einer früheren Kommunikationsverbindung hinterlegte biometrische Probe (12) und/oder biometrische Merkmalsstruktur des Teilnehmers zugreift.

20. Vorrichtung nach einem der drei vorstehenden Ansprüche, mit einer Verifikationseinrichtung, welche zur Verifikation der Identität eines Teilnehmers zur Auswertung von sprachlichen Äußerungen zur Personenerkennung ausgebildet ist und/oder zur Auswertung anderer biometrischer Merkmale zur Personenerkennung ausgebildet ist, insbesondere zur Auswertung von Fingerabdrücken, Gesichtern, Augen, Handschriften, Handformen, Handabdrücken und/oder Tastaturbedienungsprofilen.

21. Speichermedium, mit darauf gespeicherten Signalen, die ausgelesen in einer rechnergestützten und mit einem Telekommunikationsnetz verbundenen Vorrichtung, das Durchführen einer Teilnehmerauthentisierung gemäß Verfahren nach einem der Ansprüche 1 bis 16 bewirken.

## Claims

1. A method for verifying, in controlled manner and on the basis of at least one biometric characteristic, the assumed identity of a calling and/or called subscriber (8) that is connected via a communication terminal to a telecommunications network, for connecting the subscriber to a communication system (7) which supports a number of at least two communication services requiring authentication and having different security requirements; wherein
after establishing a communication connection between the subscriber (8) and a verification device (1) connected to the telecommunications network, a determined identity identifier (9) and the subscriber (8) are associated with each other in order to identify the subscriber, a request to use at least one of the communication services requiring authentication is transmitted to the verification device, at least one biometric sample (12) of the subscriber is acquired and a biometric characteristic structure is detected from the biometric sample (13); and wherein
when performing subscriber authentication for the requested communication service, a biometric imprint (20a, 20b, 20c) initially associated with and stored for the identity identifier for subscriber authentication of the number of communication services requiring authentication is compared, as a reference imprint, with at least one characteristic of the detected biometric characteristic structure;
if a first threshold value (11a, 11b, ..., 11e) is reached, the identification of the calling subscriber (8) is verified for the requested communication service in response to the comparison result (25), and the calling subscriber is connected to the communication system (7) supporting said requested communication service; and
if a second threshold (16, 11a, 11b, ..., 11e) is reached, an adapted biometric imprint is calculated (14b) in response to the comparison result (25) using the detected biometric characteristic structure (18, 19, 26, 27) and is associated with and stored (14d) for the identity identifier for subscriber authentication for the number of communication services requiring authentication instead of the biometric imprint (14c) used as the reference imprint;
**characterized in that**
a) the second threshold value is consistent for the number of the at least two communication services requiring authentication; and/or wherein
if the identity of the subscriber has been verified, the obtained comparison value (25) is made available to the communication system, the obtained comparison value is compared, by the communication system, with a second threshold value (16) which is consistent for the number of the at least two communication services requiring authentication and/or corresponds to the first threshold value of the highest security level, and in response to the comparison result, an adaptation of the biometric imprint used as the reference imprint, which has possibly already been made by the verification device, is undone (15a).

2. The method according to claim 1, wherein the adapted biometric imprint is calculated with additional use of the biometric imprint (14c) used as a reference imprint and/or of at least one stored biometric sample (12) and/or of a biometric characteristic structure based on an earlier communication connection with the subscriber.

3. The method according to any one of the preceding claims, wherein prior to performing a subscriber authentication it is checked whether the identified subscriber is to be treated as a first-time user, or whether resetting is to be performed for the identified subscriber as notified by the subscriber or the verification device by signaling, wherein, if the check indicates that the subscriber is to be treated as a first-time user or resetting is to be performed, a biometric imprint (20a, 20b, 20c) is calculated from the at least one biometric characteristic structure, which is initially associated with and stored for the identity identifier for authentication of the subscriber for the number of communication services requiring authentication.

4. The method according to any one of the preceding claims, wherein, if the comparison between the reference imprint and the acquired biometric characteristic structure does not yield any similarity, a further item of identification data is generated, and the identity identifier is expanded by this further item of identification data.

5. The method according to any one of the preceding claims, wherein, once the identity has been verified, the identity identifier of the subscriber is made available to the communication system.

6. The method according to any one of the preceding claims, wherein the first threshold value is predefined as a function of the appertaining security requirement of the requested communication service.

7. The method according to any one of the preceding claims, wherein an adaptation threshold value (16) separate from the first threshold value is predefined as the second threshold value.

8. The method according to any one of the preceding claims, wherein the first threshold value that has been predefined for a given security requirement, in particular the threshold value that has been predefined for the highest security requirement, is predefined as the second threshold value.

9. The method according to any one of the preceding claims, wherein prior to the adaptation of the biometric imprint used as a reference imprint, it is buffered (15b), and wherein, to undo the adaptation, the buffered reference imprint is read out again and the adapted reference imprint is overwritten by the read-out reference imprint.

10. The method according to any one of the preceding claims, wherein, for calculating a biometric imprint which is initially associated with and stored for the identity identifier for authentication of the subscriber for the number of communication services requiring authentication, a function is predefined on the basis of criteria of the highest security requirement.

11. The method according to any one of the preceding claims, wherein, as the identity identifier, an item of identification data is determined which identifies the communication terminal and/or the telecommunication connection used to connect the communication terminal to the telecommunications network.

12. The method according to the preceding claim, wherein a CLI, ANI, HLR, IP address, or ID number is associated as the item of identification data.

13. The method according to any one of the preceding claims, wherein, as the identity identifier, an item of identification data is determined which identifies the calling subscriber which is connected to the telecommunications network via the communication terminal.

14. The method according to the preceding claim, wherein a PIN is associated as the item of identification data.

15. The method according to any one of the preceding claims, wherein a biometric sample based on an acoustic data item, an optical data item and/or a behavioral data item is acquired as the biometric sample.

16. The method according to any one of the preceding claims, wherein for acquiring the biometric sample, linguistic utterances, a hand, a finger, the face, the eye and/or a keyboard operation profile of the calling subscriber is acquired using digitizing signals, depending on the configuration of the communication terminal and the configuration of the verification device.

17. A device comprising means for carrying out the method according to any one of the preceding claims.

18. The device according to the preceding claim, which comprises a verification device (1) connectable/connected to a telecommunications network, wherein the verification device comprises means (1a, 2, 2a, 3, 4, 5, 6, 10, 11, 13, 14)
for acquiring biometric samples of calling and/or called subscribers, which are each connected to the verification device via the telecommunications network via a communication terminal that is configured to transmit such a biometric sample;
for detecting a biometric characteristic structure from an acquired biometric sample;
for calculating a biometric imprint from at least one acquired biometric characteristic structure;
for storing biometric imprints for calling and/or called subscribers;
for comparing a stored biometric imprint with at least one characteristic of a detected biometric characteristic structure;
for further connecting a subscriber in response to the comparison result reaching a first threshold value as determined by said comparing means; and
for calculating and storing an adapted imprint using the detected biometric characteristic structure in response to the comparison result reaching a second threshold value as determined by said comparing means.

19. The device according to the preceding claim, wherein said means for calculating the adapted biometric imprint additionally accesses the biometric imprint (14c) used for comparison, and/or at least one biometric sample (12) and/or a biometric characteristic structure of the subscriber stored in a memory on the basis of a previous communication connection.

20. The device according to any one of the three preceding claims, comprising a verification device which is configured for verifying the identity of a subscriber for evaluating linguistic utterances for identifying persons and/or is configured for evaluating other biometric characteristics for identifying persons, in particular for evaluating fingerprints, faces, eyes, handwriting, hand shapes, hand prints, and/or keyboard operation profiles.

21. A storage medium with signals stored thereon which, when being read out in a computer-assisted device connected to a telecommunications network, cause a subscriber authentication to be carried out according to the method of any one of claims 1 to 16.

## Revendications

1. Procédé de vérification commandée de l'identité supposée d'un abonné (8) appelant et/ou appelé, qui est connecté à un réseau de télécommunication par l'intermédiaire d'un terminal de communication, sur la base d'au moins une caractéristique biométrique aux fins de connexion de l'abonné à un système de communication (7), qui assiste une pluralité d'au moins deux services de communication soumis à authentification présentant différentes exigences de sécurité ;
dans lequel, une fois une liaison de communication établie entre l'abonné (8) et un système de vérification (1) connecté au réseau de télécommunication, un identifiant d'identité (9) établi et l'abonné (8) sont associés l'un à l'autre pour l'identification de ce dernier, une demande d'exploitation d'au moins un des services de communication soumis à authentification est transmise au système de vérification, au moins un échantillon biométrique (12) de l'abonné est acquis et une structure de caractéristiques biométriques est détectée (13) à partir de l'échantillon biométrique ;
et dans lequel, lors de la mise en oeuvre d'une authentification d'abonné pour le service de communication demandé, une empreinte biométrique (20a, 20b, 20c) attribuée par initialisation pour l'identifiant d'identité et mise en mémoire est comparée à au moins une caractéristique de la structure de caractéristiques biométriques détectée aux fins d'authentification d'abonné de la pluralité de services de communication soumis à authentification en tant qu'empreinte de référence,
lorsqu'une première valeur limite (11a, 11b, ..., 11e) est atteinte en réponse au résultat de la comparaison (25), l'identification de l'abonné (8) appelant pour le service de communication demandé est vérifiée et l'abonné appelant est connecté au système de communication (7) assistant ce service de communication demandé,
et lorsqu'une deuxième valeur limite (16, 11a, 11b, ..., 11e) est atteinte en réponse au résultat de la comparaison (25) au moyen de la structure de caractéristiques biométriques (18, 19, 26, 27) détectée, une empreinte biométrique adaptée est calculée (14b) et, pour l'identifiant d'identité, aux fins d'authentification d'abonné pour la pluralité de services de communication soumis à authentification, attribuée et mise en mémoire (14d) en lieu et place de l'empreinte biométrique (14c) utilisée comme empreinte de référence,
**caractérisé en ce que** :
a) la deuxième valeur limite est uniforme pour la pluralité desdits au moins deux services de communication soumis à authentification,
et/ou dans lequel :
- pour l'identité vérifiée de l'abonné, la valeur comparative (25) atteinte est fournie au système de communication, la valeur comparative atteinte est comparée par le système de communication à une deuxième valeur limite (16), laquelle est uniforme pour la pluralité desdits au moins deux services de communication soumis à authentification et/ou correspond à la première valeur limite du niveau de sécurité le plus élevé, et, en réponse au résultat de la comparaison, une adaptation, déjà réalisée le cas échéant par le système de vérification, de l'empreinte biométrique utilisée comme empreinte de référence est à nouveau annulée (15a).

2. Procédé selon la revendication 1, dans lequel l'empreinte biométrique adaptée est calculée au moyen en outre de l'empreinte biométrique (14c) utilisée comme empreinte de référence et/ou d'au moins un échantillon biométrique (12) mis en mémoire et/ou d'une structure de caractéristiques biométriques sur la base d'une connexion de communication antérieure avec l'abonné.

3. Procédé selon l'une quelconque des revendications précédentes, dans lequel, avant la mise en oeuvre d'une authentification d'abonné, on vérifie si l'abonné authentifié est à traiter comme premier utilisateur ou bien si, pour l'abonné identifié, une réinitialisation indiquée par l'abonné ou le système de vérification par signalisation doit être mise en oeuvre, dans lequel une empreinte biométrique (20a, 20b, 20c) est calculée à partir de ladite au moins une structure de caractéristiques biométriques, laquelle empreinte biométrique est attribuée par initialisation pour l'identifiant d'identité et mise en mémoire, aux fins d'authentification d'abonné de la pluralité de services de communication soumis à authentification, lorsque la vérification fait apparaître que l'abonné est à traiter comme premier utilisateur ou qu'une réinitialisation doit être mise en oeuvre.

4. Procédé selon l'une quelconque des revendications précédentes, dans lequel, lorsque la comparaison entre l'empreinte de référence et la structure de caractéristiques biométriques détectée n'aboutit à aucune similitude, une autre donnée d'identifiant est générée et l'identifiant d'identité est étendu à cette autre donnée d'identifiant.

5. Procédé selon l'une quelconque des revendications précédentes, dans lequel l'identifiant d'identité de l'abonné est fourni au système de communication lorsque l'identité est vérifiée.

6. Procédé selon l'une quelconque des revendications précédentes, dans lequel la première valeur limite est prédéfinie en fonction de l'exigence de sécurité respective du service de communication demandé.

7. Procédé selon l'une quelconque des revendications précédentes, dans lequel une valeur limite d'adaptation (16) séparée de la première valeur limite est prédéfinie en tant que deuxième valeur limite.

8. Procédé selon l'une quelconque des revendications précédentes, dans lequel la première valeur limite prédéfinie pour une exigence de sécurité définie, en particulier la valeur limite prédéfinie pour l'exigence de sécurité la plus élevée, est prédéfinie en tant que deuxième valeur limite.

9. Procédé selon l'une quelconque des revendications précédentes, dans lequel, avant l'adaptation de l'empreinte biométrique utilisée comme empreinte de référence, celle-ci est mise en mémoire temporairement (15b), et dans lequel l'empreinte de référence mise en mémoire temporairement est à nouveau consultée pour annuler l'adaptation et l'empreinte de référence adaptée est écrasée par l'empreinte de référence consultée.

10. Procédé selon l'une quelconque des revendications précédentes, dans lequel, pour le calcul d'une empreinte biométrique qui est attribuée par initialisation pour l'identifiant d'identité et mise en mémoire, aux fins d'authentification de la pluralité de services de communication soumis à authentification, un fonctionnement est prédéfini en fonction des critères de l'exigence de sécurité la plus élevée.

11. Procédé selon l'une quelconque des revendications précédentes, dans lequel une donnée d'identifiant identifiant le terminal de communication et/ou un raccordement de télécommunication utilisé pour connecter le terminal de communication au réseau de télécommunication est établie comme identifiant d'identité.

12. Procédé selon la revendication précédente, dans lequel une identification de la ligne appelante, une identification automatique de numéro, un enregistreur de localisation nominal, une adresse IP ou un numéro d'identification est attribué(e) en tant que donnée d'identifiant.

13. Procédé selon l'une quelconque des revendications précédentes, dans lequel une donnée d'identifiant identifiant l'abonné appelant qui est connecté au réseau de télécommunication par l'intermédiaire du terminal de communication, est établie en tant qu'identifiant d'identité.

14. Procédé selon la revendication précédente, dans lequel un numéro d'identification personnel est attribué en tant qu'identifiant d'identité.

15. Procédé selon l'une quelconque des revendications précédentes, dans lequel un échantillon biométrique basé sur une donnée acoustique, une donnée optique et/ou une donnée de comportement est acquis en tant qu'échantillon biométrique.

16. Procédé selon l'une quelconque des revendications précédentes, dans lequel, pour l'acquisition de l'échantillon biométrique, en fonction de la conception du terminal de communication et de la conception du système de vérification, des expressions vocales, une main, un doigt, le visage, l'oeil et/ou un profil de manipulation de clavier de l'abonné appelant sont acquis au moyen de signaux de numérisation.

17. Dispositif comprenant des systèmes conçus pour la mise en oeuvre du procédé selon l'une quelconque des revendications précédentes.

18. Dispositif selon la revendication précédente, lequel comporte un système de vérification (1) connecté/ pouvant être connecté à un réseau de télécommunication, le système de vérification comportant des systèmes (1a, 2, 2a, 3, 4, 5, 6, 10, 11, 13, 14),
pour l'acquisition d'échantillons biométriques d'abonnés appelants et/ou appelés, qui sont connectés chacun au système de vérification par un terminal de communication, lequel est conçu de manière correspondante pour transmettre un échantillon biométrique de ce type, par l'intermédiaire du réseau de télécommunication,
pour la détection d'une structure de caractéristiques biométriques à partir d'un échantillon biométrique acquis,
pour le calcul d'une empreinte biométrique à partir d'au moins une structure de caractéristiques biométriques détectée,
pour la mise en mémoire d'empreintes biométriques pour les abonnés appelants et/ou appelés,
pour la comparaison d'une empreinte biométrique mise en mémoire à au moins une caractéristique d'une structure de caractéristiques biométriques détectée,
pour la poursuite de la connexion d'un abonné en réponse au fait que le résultat de la comparaison établi par le système de comparaison a atteint une première valeur limite, et
pour le calcul et la mise en mémoire d'une empreinte adaptée au moyen de la structure de caractéristiques biométriques détectée en réponse au fait que le résultat de la comparaison établi par le système de comparaison a atteint une deuxième valeur limite.

19. Dispositif selon la revendication précédente, dans lequel le système de calcul de l'empreinte biométrique adaptée accède en outre à l'empreinte biométrique (14c) utilisée pour la comparaison et/ou à au moins un échantillon biométrique (12) déposé dans une mémoire sur la base d'une connexion de communication antérieure et/ou à la structure de caractéristiques biométriques de l'abonné.

20. Dispositif selon l'une des trois revendications précédentes, comprenant un système de vérification, lequel, pour vérifier l'identité d'un abonné, est conçu pour analyser les expressions vocales aux fins de reconnaissance d'une personne et/ou pour analyser d'autres caractéristiques biométriques aux fins de reconnaissance d'une personne, en particulier pour analyser des empreintes digitales, des visages, des yeux, des écritures, des formes de main, des empreintes de main et/ou des profils de manipulation de clavier.

21. Support de stockage, sur lequel des signaux sont mis en mémoire, qui, lorsqu'ils sont consultés dans un dispositif assisté par ordinateur et connecté à un réseau de télécommunication, entraînent la mise en oeuvre d'une authentification d'un abonné conformément au procédé selon l'une des revendications 1 à 16.
